# EUROPÄISCHE PATENTANMELDUNG

(11) **EP 1 854 615 A1**
(43) Veröffentlichungstag der Anmeldung: **14.11.2007**
(21) Anmeldenummer: 07002369.2
(22) Anmeldetag: 03.02.2007
(51) Int. Cl.: B29C 51/20

(54) **Formstation mit einer kontinuerlichen durch die Thermoformmaschine durchlaufenden Folie**

(30) Priorität: 12.05.2006 DE 102006022634
(71) Anmelder: UHLMANN PAC-SYSTEME GmbH & Co. KG, 88471 Laupheim (DE)
(72) Erfinder: Pöhler, Hans-Martin, 89150 Laichingen (DE); Knüppel, Jörg, 88477 Schwendi (DE); Zoller, Bernd, 88471 Laupheim (DE); Gertischke, Detlev, Dipl.-Ing., 88471 Laupheim (DE)
(74) Vertreter: Hentrich, Swen

(57) **Zusammenfassung**

Die Erfindung betrifft eine Formstation für eine Thermoformmaschine, zum Formen von Näpfen in einer Folie, mit einem oberen Formwerkzeug (2) und einem unteren Formwerkzeug (3), zwischen denen die Folie hindurch geführt ist und die relativ zueinander zwischen einer Offenstellung und einer Arbeitsstellung verstellbar sind, und mit einer Vorschubeinrichtung (4) für die Folie. Die Vorschubeinrichtung (4) weist eine obere Klemmplatte (5) und einer untere Klemmplatte (6) auf, die relativ zueinander zwischen einer Offenstellung und einer Arbeitsstellung verstellbar sind, wobei das untere Formwerkzeug (3) und das obere Formwerkzeug (2) sowie die obere Klemmplatte (5) und die untere Klemmplatte (6) jeweils zwischen einem vorderen Umkehrpunkt (7, 8) und einem hinteren Umkehrpunkt (9, 10) parallel zur Folienlaufrichtung (11) verstellbar sind.

## Beschreibung

Die Erfindung betrifft eine Formstation für eine Thermoformmaschine, insbesondere für die pharmazeutische Verpackungsindustrie, zum Formen von Näpfen in einer Folie, mit einem oberen Formwerkzeug und einem unteren Formwerkzeug, zwischen denen die Folie hindurch geführt ist und die relativ zueinander zwischen einer Offenstellung und einer Arbeitsstellung verstellbar sind, und mit einer Vorschubeinrichtung für die Folie.

Derartige in einer Thermoformmaschine eingesetzte Formstationen dienen dazu, in einer auf einer Vorratsrolle bereitgestellten Folie Näpfe auszubilden, die in einer nachfolgenden Füllstation der Thermoformmaschine mit Kleinteilen wir Tabletten, Dragees, Pillen oder dergl. befüllt werden können. Um die Folie schnell und mit der erforderlichen Qualität verformen zu können, ist es in der Regel erforderlich, die Folie in einer der Formstation vorgelagerten Heizstation auf Verformtemperatur zu erwärmen und die so erwärmte Folie dann der Formstation zuzuführen. Dabei ist es wünschenswert, die Folie kontinuierlich durch die Thermoformmaschine durchlaufen lassen zu können, um bei dieser Thermoformmaschine eine möglichst hohe Leistungsfähigkeit zu erzielen. Die Formung der Folie selber geschieht aber mittels des oberen Formwerkzeugs und des unteren Formwerkzeugs in einer taktweisen Verstellung zwischen der Offenstellung und der Arbeitsstellung.

Der Erfindung liegt daher die Aufgabe zugrunde, eine Formstation der eingangs genannten Art so auszubilden, dass das Zusammenwirken der kontinuierlich laufenden Folie mit der getaktet arbeitenden Formstation optimiert ist.

Diese Aufgabe wird nach der Erfindung bei einer Formstation der eingangs genannten Art dadurch gelöst, dass die Vorschubeinrichtung eine obere Klemmplatte und eine untere Klemmplatte aufweist, die relativ zueinander zwischen einer Offenstellung und einer Arbeitsstellung verstellbar sind, und dass das untere Formwerkzeug und das obere Formwerkzeug sowie die obere Klemmplatte und die untere Klemmplatte jeweils zwischen einem vorderen Umkehrpunkt und einem hinteren Umkehrpunkt parallel zur Folienlaufrichtung verstellbar sind.

Diese Formstation zeichnet sich dadurch aus, dass bei einer kontinuierlich laufenden Folie das untere Formwerkzeug und das obere Formwerkzeug für den Vorgang der Formung zwischen dem vorderen Umkehrpunkt und dem hinteren Umkehrpunkt mit der Folie mitgeführt werden können, um den Verformprozess durchzuführen, sobald die erforderliche Synchronizität zwischen dem oberen Formwerkzeug und dem unteren Formwerkzeug sowie der Folie hergestellt ist.

Im Rahmen der Erfindung ist es besonders bevorzugt, wenn die Formwerkzeuge und die Vorschubeinrichtung durch eine wechselweisen vorschubwirksamen Betrieb in der Arbeitsstellung während der Verstellung in der Folienlaufrichtung zur Erzeugung eines kontinuierlichen Vorschubs der Folie vorgesehen sind, also die Vorschubeinrichtung selber nicht permanent aktiv sein muss, da ein zeitlicher Teil des Vorschubs durch die Formwerkzeuge bewirkt wird. Dabei bleibt die Synchronizität zwangsweise beibehalten. Außerdem ist sichergestellt, dass auch die Klemmplatten problemlos zwischen dem hinteren und dem vorderen Umkehrpunkt verstellbar sind, ohne dass der Vorschub der Folie beeinträchtigt wird oder die Bahnspannung in nicht akzeptabler Weise schwankt.

Besonders vorteilhaft ist es bei der erfindungsgemäßen Formstation, wenn der Abstand zwischen dem hinteren Umkehrpunkt und dem vorderen Umkehrpunkt der Formwerkzeuge und der Klemmplatten jeweils größer als der durch diese bewirkte Vorschub ist und ein Synchronisationsintervall zur Synchronisation mit der Folie vor dem Wechsel in die Arbeitsstellung einschließt. Durch diese Gestaltung ist es ermöglicht, dass die Klemmplatten und die Formwerkzeuge bei ihrer Verstellung zwischen dem vorderen Umkehrpunkt und dem hinteren Umkehrpunkt nicht vollständig vorschubwirksam sein müssen, sondern stets ein Intervall zur Verfügung steht, in dem die Formwerkzeuge und die Klemmplatten mit der Folie synchronisiert werden.

Vorteilhaft ist es weiterhin, wenn der Abstand der Umkehrpunkte bei mit den geformten Näpfen der Folie verzahnten Formwerkzeugen und/oder Klemmplatten ein Bremsintervall nach der Aufhebung der Verzahnung bei dem Wechsel in die Offenstellung einschließt. Dies stellt sicher, dass z.B. nach der Formung der Folie und Ausbildung der Näpfe die dazu in dem oberen Formwerkzeug vorgesehenen Stempel vollständig aus den gebileten Näpfen entfernt werden können, bevor das obere Formwerkzeug und synchron dazu das untere Formwerkzeug die Synchronizität mit dem Vorschub der Folie wieder verliert.

Im Rahmen der Erfindung ist weiterhin vorgesehen, dass der Verstellweg der Formwerkzeuge zwischen dem vorderen Umkehrpunkt und dem hinteren Umkehrpunkt kleiner als der als die Erstreckung der Formwerkzeuge in der Folienlaufrichtung ist. Die erfindungsgemäße Formstation kann besonders platzsparend ausgestaltet sein, weil die Formwerkzeuge und die Klemmplatten nicht jeweils zwischen dem vorderen und dem hinteren Umkehrpunkt um eine volle Länge der in einem Arbeitstakt bearbeiteten Folie verstellt werden müssen, weil der Vorschub auch während des Rücklaufs zwischen dem hinteren Umkehrpunkt und dem vorderen Umkehrpunkt zum Wechsel des zwischen den Formwerkzeugen befindlichen Folienabschnitts beiträgt.

Um die Qualität der in der Folie augebildeten Näpfe zu verbessern, ist es im Rahmen der Erfindung vorgesehen, dass zumindest eines der Formwerkzeuge temperierbar, insbesondere thermisch mit einer Kühleinrichtung verbunden ist, um so die durch die Formwerkzeuge ausgebildeten Näpfe schnell unter die Verformtemperatur der Folie abzukühlen und so die geformten Näpfe zu stabillisieren. Dabei ist es günstig, wenn auch zumindest eine der Klemmplatten temperierbar, insbesondere thermisch mit einer Kühleinrichtung verbunden ist, da so die Abkühlung der Folie fortgesetzt werden kann, auch wenn diese selber nicht mehr bei ihrer kontinuierlichen Bewegung sich im Wirkbereich der Formwerkzeuge befindet.

Um die Formstation möglichst flexibel auch bei einem Formatwechsel einsetzen zu können, ist zur Verstellung der Formwerkzeuge und der Klemmplatten in Vorschubrichtung jeweils ein geregelter Antrieb vorgesehen. Aus diesem Grunde ist gleichfalls für den Wechsel zwischen der Offenstellung und der Arbeitsstellung ein druckmittelbetätigter, vorzugsweise pneumatischer Antrieb für die Klemmplatten vorgesehen.

Außerdem ist es günstig, wenn die Ebene der Folie in der Formstation und die dazu parallel ausgerichteten Formwerkzeuge und Klemmplatten mit der Vertikalen einen Neigungswinkel einschließt.

Im folgenden wird die Erfindung an einem in der Zeichnung dargestellten Ausführungsbeispiel näher erläutert; es zeigen:
- Fig. 1: die schematische Darstellung einer erfindungsgemäßen Formstation in einer Seitenansicht, mit den Formwerkzeugen am vorderen Umkehrpunkt in der Offenstellung und den Klemmplatten in der Arbeitsstellung,
- Fig. 2: eine der Figur 1 entsprechende Darstellung mit den Formwerkzeugen während des Synchronisationsintervalls,
- Fig. 3: eine der Figur 1 entsprechende Darstellung mit den Formwerkzeugen nach dem Ende des Synchronisationsintervalls in der Arbeitsstellung, während die Klemmplatten gleichfalls noch in der Arbeitsstellung sind,
- Fig. 4: eine der Figur 1 entsprechende Darstellung mit den Formwerkzeugen in der Arbeitsstellung und den Klemmplatten in der Offenstellung,
- Fig. 5: eine der Figur 1 entsprechende Darstellung mit den Formwerkzeugen in der Arbeitsstellung und den Klemmplatten in der Offenstellung während des Rücklaufs von dem hinteren Umkehrpunkt zu dem vorderen Umkehrpunkt,
- Fig. 6: eine der Figur 1 entsprechende Darstellung mit den Formwerkzeugen in der Arbeitsstellung und den Klemmplatten in der Offenstellung am vorderen Umkehrpunkt,
- Fig. 7: eine der Figur 1 entsprechende Darstellung mit den Formwerkzeugen und den Klemmplatten in der Arbeitsstellung,
- Fig. 8: eine der Figur 1 entsprechende Darstellung mit den Formwerkzeugen in dem Bremsintervall in der Offenstellung und den Klemmplatten in der Arbeitsstellung, und
- Fig. 9: eine der Figur 1 entsprechende Darstellung mit den Formwerkzeugen am hinteren Umkehrpunkt in der Offenstellung und den Klemmplatten in der Arbeitsstellung nach dem vollzogenen Wechsel der vorschubwirksamen Tätigkeit und der Rückkehr der Formwerkzeuge zum vorderen Umkehrpunkt gemäß Figur 1.

In der Zeichnung ist eine Formstation 1 für eine Thermoformmaschine dargestellt, bei der von einer Vorratsrolle eine Folie einer in der Zeichnung nicht dargestellten Heizstation zugeführt wird, um die Folie auf Verformtemperatur zu erwärmen und in der der Heizstation in Folienlaufrichtung stromab nachgeordneten Formstation 1 zu verformen. Für diese Verformung weist die Formstation 1 ein oberes Formwerkzeug 2 und ein unteres Formwerkzeug 3 auf, zwischen denen hindurch die Folie geführt ist. Das untere Formwerkzeug 3 und das obere Formwerkzeug 2 sind relativ zueinander verstellbar zwischen einer Offenstellung und einer Arbeitsstellung, wobei in der Arbeitsstellung die Formung der Näpfe in der Folie erfolgt, indem in der Regel im oberen Formwerkzeug 2 ausgebildete Stempel in die Folie eindringen, die von den unteren, Kavitäten zur Aufnahme der Stempel aufweisenden Formwerkzeug 3 gestützt wird. In der Formstation 1 ist es erforderlich, die von der Heizstation zugeführte Folie an die nachfolgende Station der Thermoformmaschine weiterzugeben, wozu auch der Formstation eine Vorschubeinrichtung 4 zugeordnet ist, die eine obere Klemmplatte 5 sowie eine untere Klemmplatte 6 aufweist, die relativ zueinander zwischen einer Offenstellung und einer Arbeitsstellung verstellbar sind und insoweit die Verstellbarkeit der Klemmplatten der Formwerkzeuge 2, 3 gleicht.

Die in der Zeichnung dargestellte Formstation 1 zeichnet sich durch eine besondere Abstimmung zwischen den Formwerkzeugen 2, 3 und den Klemmplatten 5, 6 auf, die jeweils in einer genau abgestimmten Weise zwischen einem vorderen Umkehrpunkt 7, 8 und einem hinteren Umkehrpunkt 9, 10 parallel zur Folienlaufrichtung (Pfeil 11) verstellbar sind und dabei durch einen wechselweisen vorschubwirksamen Betrieb in der Arbeitsstellung während der Verstellung in Folienlaufrichtung 11 einen kontinuierlichen Vorschub der Folie erzeugen. Dabei ist der Abstand zwischen dem hinteren Umkehrpunkt 9, 10 und dem vorderen Umkehrpunkt 7, 8 der Formwerkzeuge 2, 3 und der Klemmplatten 5, 6 jeweils größer als der durch diese bewirkte Vorschub, da ein Synchronisationsintervall zur Synchronisation mit der Folie vor dem Wechsel in die Arbeitsstellung bereitgestellt ist. Weiterhin schließt dieser Abstand auch ein Bremsintervall bei dem Wechsel in die Offenstellung ein. Zu beachten bei der in der Zeichnung dargestellten Formstation 1 ist, dass der Verstellweg der Formwerkzeuge 2, 3 zwischen dem vorderen Umkehrpunkt und dem hinteren Umkehrpunkt kleiner als die Erstreckung der Formwerkzeuge 2, 3 in der Folienlaufrichtung 11 ist.

Schließlich ist darauf hinzuweisen, dass zumindest eines der Formwerkzeuge 2, 3 und zumindest eine der Klemmplatten 5, 6 temperierbar sind, nämlich thermisch mit einer Kühleinrichtung verbunden sind, um nach der erfolgten Verformung schnell ein Abkühlen der in der Heizstation erwärmten Folie unter die Verformtemperatur zu erzielen und die in der Formstation 1 zwischen den Formwerkzeugen ausgebildeten Näpfe zu stabilisieren.

Zur Verstellung der Formwerkzeuge 2, 3 und der Klemmplatten 5, 6 und für den Wechsel der Formwerkzeuge 2, 3 zwischen der Arbeitsstellung und der Offenstellung ist jeweils ein geregelter Antrieb vorgesehen, während für den Wechsel zwischen der Offenstellung und der Arbeitsstellung der Klemmplatten 5, 6 ein druckmittelbetätigter, pneumatischer Antrieb vorgesehen ist.

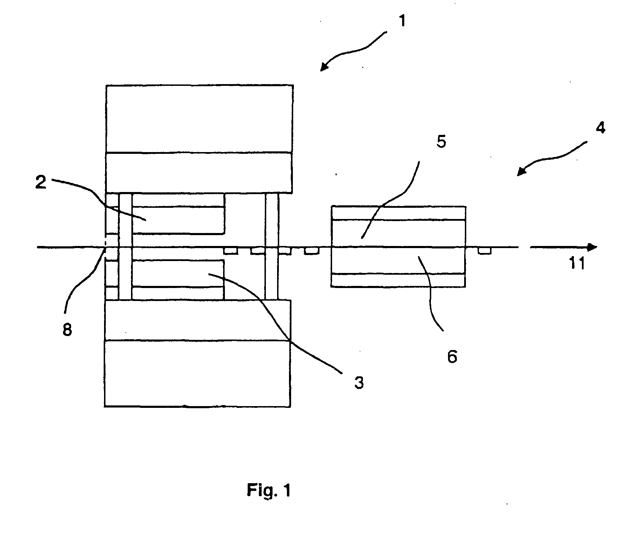

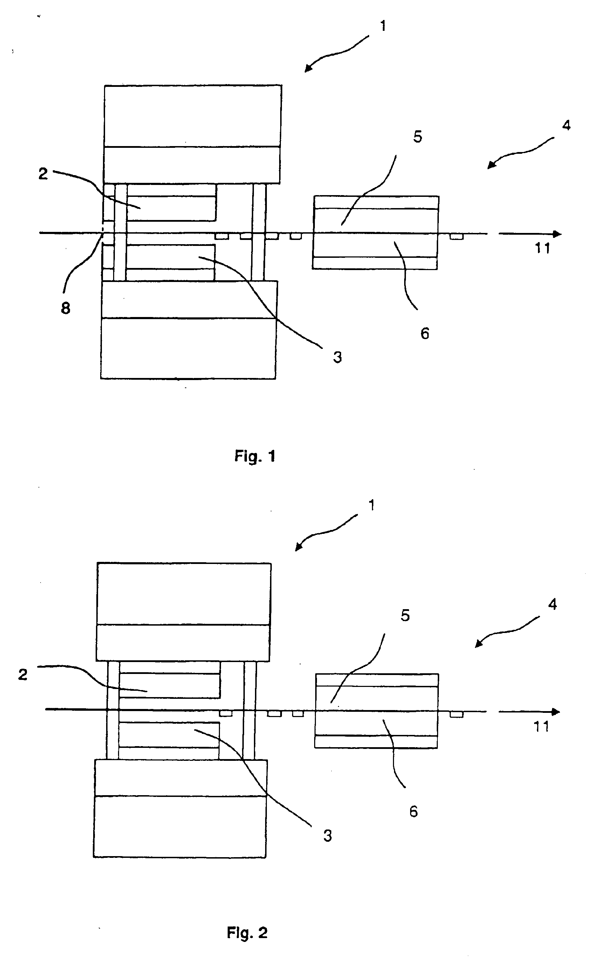

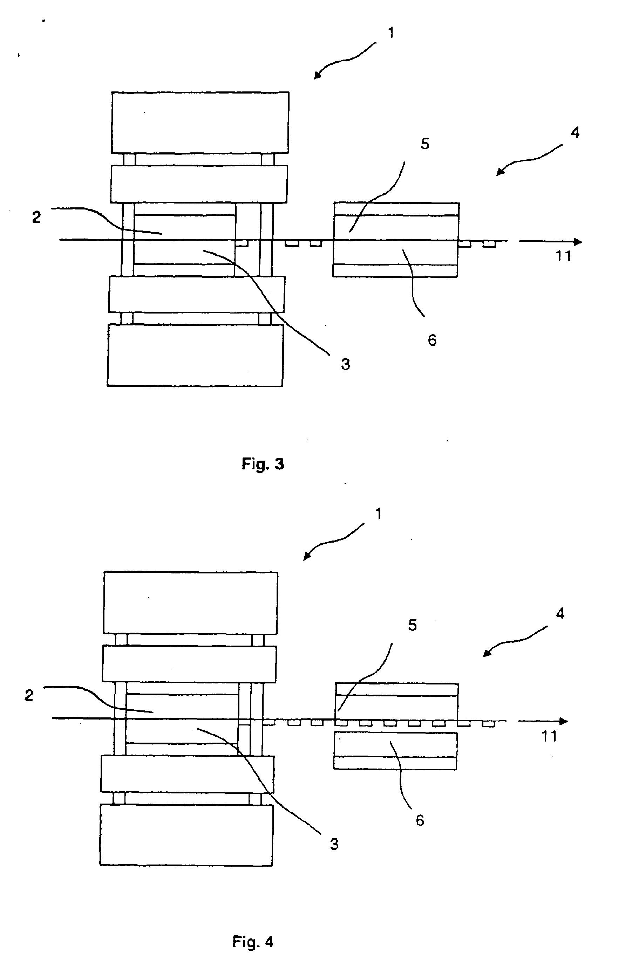

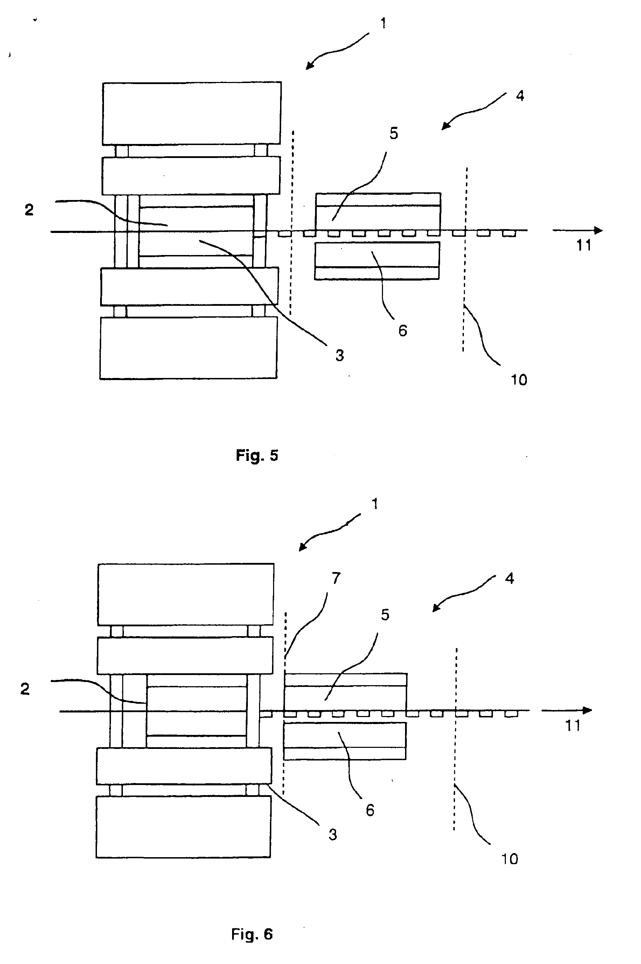

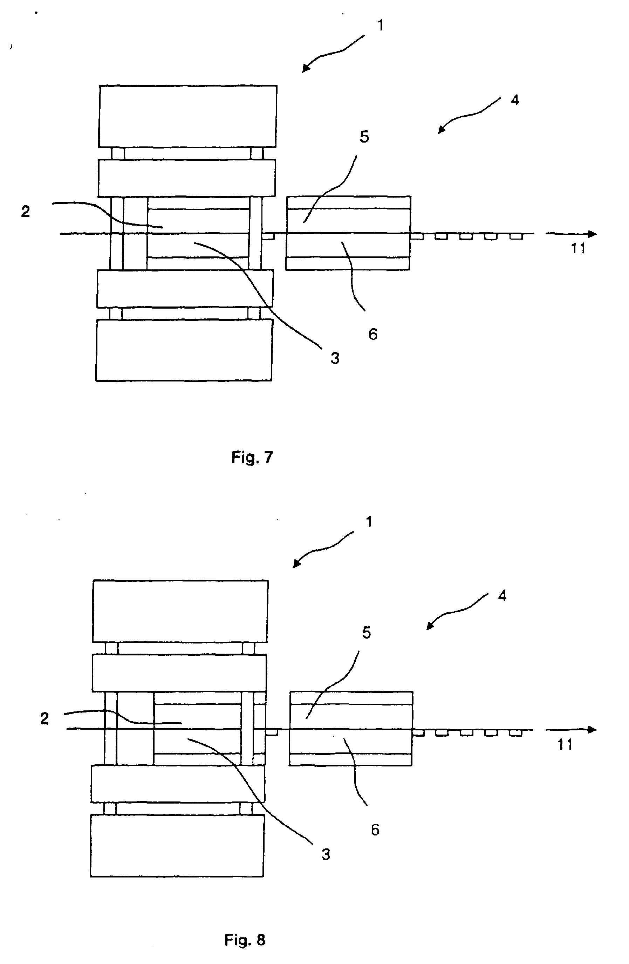

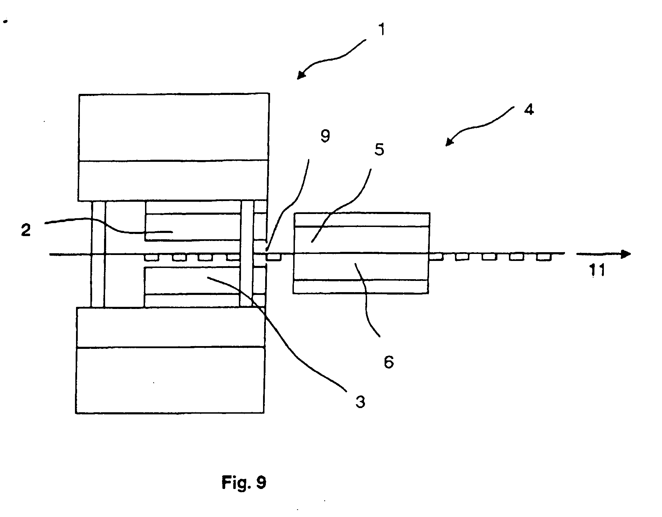

Im folgenden wird nur noch kurz unter Verweis auf die Figuren 1 bis 9 ein vollständiger Takt der Formstation 1 während des kontinuierlichen Vorschubs der Folie erläutert. Die Figur 1 zeigt die Formwerkzeuge 2, 3 am vorderen Umkehrpunkt 8 in der Offenstellung, zu Beginn eines Taktes, während die Klemmplatten 5, 6 in der Arbeitsstellung durch die abgesenkte obere Klemmplatte 5 den Vorschub der Folie bewirken. Ausgehend von dem in Figur 1 gezeigten Zustand werden die Formwerkzeuge 2, 3 während des Synchronisationsintervalls auf die Foliengeschwindigkeit beschleunigt, während unverändert der Vorschub durch die Klemmplatten 5, 6 der Vorschubeinrichtung 4 bewirkt wird (Fig. 2). Figur 3 zeigt den Zustand, in dem die Formwerkzeuge 2, 3 zum Ende des Synchronisationsintervalls die Geschwinigkeit der Folie erreicht haben auf ihrer Verstellung in Richtung zum hinteren Umkehrpunkt 9, so dass die Formwerkzeuge 2, 3 aus der Offenstellung in die Arbeitsstellung überführt und damit vorschubwirksam sind. Die Klemmplatten 5, 6 sind gleichfalls noch vorschubwirksam, um ohne Störung oder Variation der Bahnspannung einen kontinuierlichen Wechsel der Vorschubwirksamkeit zu erzielen, der in Figur 4 vollzogen ist, bei der die Formwerkzeuge 2, 3 zum einen die Ausbildung der Näpfe fortsetzen und dabei den Vorschub übernehmen, während die Klemmplatten 5, 6 geöffnet sind und abgebremst werden. In Figur 5 haben die Klemmplatten 5, 6 nach Durchlaufen des Bremsintervalls ihren hinteren Umkehrpunkt 10 erreicht, während die Formwerkzeuge 2, 3 die Folie formen und kühlen. Figur 6 zeigt den Zustand, dass die Klemmplatten 5, 6 zurückgekehrt sind in ihren vorderen Umkehrpunkt 7, während die Formwerkzeuge 2, 3 unverändert vorschubwirksam sind und die Folie kühlen. Figur 7 zeigt den Zustand, bei dem erneut die Vorschubwirksamkeit wechselt, während sowohl die Formwerkzeuge 2, 3 als auch die Klemmplatten 5, 6 in der Arbeitsstellung geschlossen sind. Figur 8 zeigt die Verstellung der Formwerkzeuge 2, 3 während des Bremsintervalls in die Offenstellung, während die Klemmplatten 5, 6 nach Durchlaufen des Synchronisationsintervalls den Vorschub wieder übernommen haben. Figur 9 schließlich zeigt die Formwerkzeuge 2, 3 am hinteren Umkehrpunkt 9 zum Ende des Bremsintervalls, bevor die Formwerkzeuge 2, 3 zum vorderen Umkehrpunkt 8 zurückkehren und ein neuer Arbeitstakt der Formstation 1 bei der kontinuierlich laufenden Folie beginnt.

## Patentansprüche

1. Formstation für eine Thermoformmaschine, insbesondere für die pharmazeutische Verpackungsindustrie, zum Formen von Näpfen in einer Folie, mit einem oberen Formwerkzeug (2) und einem unteren Formwerkzeug (3), zwischen denen die Folie hindurch geführt ist und die relativ zueinander zwischen einer Offenstellung und einer Arbeitsstellung verstellbar sind, und mit einer Vorschubeinrichtung (4) für die Folie, **dadurch gekennzeichnet, dass** die Vorschubeinrichtung (4) eine obere Klemmplatte (5) und einer untere Klemmplatte (6) aufweist, die relativ zueinander zwischen einer Offenstellung und einer Arbeitsstellung verstellbar sind, und dass das untere Formwerkzeug (3) und das obere Formwerkzeug (2) sowie die obere Klemmplatte (5) und die untere Klemmplatte (6) jeweils zwischen einem vorderen Umkehrpunkt (7, 8) und einem hinteren Umkehrpunkt (9, 10) parallel zur Folienlaufrichtung (11) verstellbar sind.

2. Formstation nach Anspruch 1, **dadurch gekennzeichnet, dass** die Formwerkzeuge (2, 3) und die Vorschubeinrichtung (4) durch einen wechselweisen vorschubwirksamen Betrieb in der Arbeitsstellung während der Verstellung in der Folienlaufrichtung (11) zur Erzeugung eines kontinuierlichen Vorschubs der Folie vorgesehen sind.

3. Formstation nach Anspruch 2, **dadurch gekennzeichnet, dass** der Abstand zwischen dem hinteren Umkehrpunkt (9, 10) und dem vorderen Umkehrpunkt (7, 8) der Formwerkzeuge (2, 3) und der Klemmplatten (5, 6) jeweils grösser als der durch diese bewirkte Vorschub ist und ein Synchronisationsintervall zur Synchronisation mit der Folie vor dem Wechsel in die Arbeitsstellung einschließt.

4. Formstation nach Anspruch 3, **dadurch gekennzeichnet, dass** der Abstand der Umkehrpunkte (7, 8, 9, 10) bei mit den geformten Näpfen der Folie verzahnten Formwerkzeugen (2, 3) und/oder Klemmplatten (5, 6) ein Bremsintervall nach der Aufhebung der Verzahnung bei dem Wechsel in die Offenstellung einschließt.

5. Formstation nach einem der Ansprüche 2 bis 4, **dadurch gekennzeichnet, dass** der Verstellweg der Formwerkzeuge (2, 3) zwischen dem vorderen Umkehrpunkt (8) und dem hinteren Umkehrpunkt (9) kleiner als die Erstreckung der Formwerkzeuge (2, 3) in der Folienlaufrichtung (11) ist.

6. Formstation nach einem der Ansprüche 1 bis 5, **dadurch gekennzeichnet, dass** zumindest eines der Formwerkzeuge (2, 3) temperierbar, insbesondere thermisch mit einer Kühleinrichtung verbunden ist.

7. Formstation einem der Ansprüche 1 bis 6, **dadurch gekennzeichnet, dass** zumindest eine der Klemmplatte (5, 6) temperierbar, insbesondere thermisch mit einer Kühleinrichtung verbunden ist.

8. Formstation nach einem der Ansprüche 1 bis 7, **dadurch gekennzeichnet, dass** zur Verstellung der Formwerkzeuge (2, 3) und der Klemmplatten (5, 6) und für den Wechsel zwischen der Offenstellung und der Arbeitsstellung der Formwerkzeuge (2, 3) jeweils ein geregelter Antrieb vorgesehen ist.

9. Formstation nach einem der Ansprüche 1 bis 8, **dadurch gekennzeichnet, dass** für den Wechsel zwischen der Offenstellung und der Arbeitsstellung ein druckmittelbetätigter, vorzugsweise pneumatischer Antrieb für die Klemmplatten (5, 6) vorgesehen ist.

10. Formstation nach einem der Ansprüche 1 bis 9, **dadurch gekennzeichnet, dass** die Ebene der Folie in der Formstation (1) und die dazu parallel ausgerichteten Formwerkzeuge (2, 3) und Klemmplatten (5, 6) mit der Vertikalen einen Neigungswinkel einschließt.
